# EUROPÄISCHE PATENTSCHRIFT

(11) **EP 1 482 218 B1**
(45) Veröffentlichungstag und Bekanntmachung des Hinweises auf die Patenterteilung: **10.09.2008**
(21) Anmeldenummer: 04010885.4
(22) Anmeldetag: 07.05.2004
(51) Int. Cl.: F16J 15/08

(54) **Zylinderkopfdichtung**
Cylinder head gasket
Joint de culasse

(30) Priorität: 30.05.2003 DE 10324667
(43) Veröffentlichungstag der Anmeldung: 01.12.2004
(73) Patentinhaber: Ste Gesellschaft für Dichtungstechnik mbH, 26386 Wilhelmshaven (DE)
(72) Erfinder: Stecher, Friedhelm, 26386 Wilhelmshaven (DE); Stecher, Christoph, Dr., 26386 Wilhelmshaven (DE)
(74) Vertreter: Epping - Hermann - Fischer

(56) Entgegenhaltungen:
- EP-A- 0 485 693
- DE-A- 4 421 219
- DE-A- 19 909 354
- DE-A- 19 941 410
- DE-U- 29 804 534

## Beschreibung

Die Erfindung betrifft eine Zylinderkopfdichtung mit mehreren Durchgangsöffnungen, welche mindestens Brennraumöffnungen und Schraubenöffnungen für Zylinderkopfschrauben bilden, zur Abdichtung eines von Motorbauteil-Dichtflächen mindestens eines Motorblocks und eines Zylinderkopfs begrenzten Dichtspalts, wobei die Zylinderkopfdichtung zumindest einseitig Erhebungen aufweist, welche mindestens eine Durchgangsöffnung in sich geschlossen umgebende Dichtungs-Dichtflächen zum Anpressen gegen mindestens eine Motorbauteil-Dichtfläche bilden, deren (d. h. der Dichtungs-Dichtflächen) Höhenprofil vor dem Einbau der Zylinderkopfdichtung zumindest ungefähr entsprechend der Topographie des sich bei zwischen Motorbauteil-Dichtflächen eingespannter Zylinderkopfdichtung ergebenden, abzudichtenden Dichtspalts ausgebildet ist und von denen die Brennraumöffnungen jeweils einzeln umschlossen werden, wobei mehrere der Erhebungen von mindestens einem mit einer Beschichtung versehenen Grundkörper gebildet werden, dessen Werkstoff derart ausgewählt und dessen Querschnitt derart gestaltet ist, daß der Grundkörper unter der maximalen, beim Einbau der Zylinderkopfdichtung sowie im Motorbetrieb auftretenden Belastung zumindest in ersten Abschnitten der Dichtungs-Dichtflächen druck- und kriechfest und damit nicht höhenverformbar ist, und wobei die Beschichtung eine unter den im Motorbetrieb auftretenden Belastungen und Relativbewegungen zwischen Zylinderkopfdichtung und Motorbauteil-Dichtflächen verschleißfeste Beschichtung ist.

Eine solche Zylinderkopfdichtung ergibt sich aus der DE 44 21 219 A1 sowie der EP-0 485 693-B1. Die in der EP-0 485 693-B1 beschriebene Zylinderkopfdichtung besitzt eine insbesondere einstückige metallische Dichtungsplatte, deren Formgebung folgende Überlegung zugrunde liegt: Für die Funktion einer Zylinderkopfdichtung können der Motorblock (Kurbelgehäuse) und der Zylinderkopf nicht als absolut steife Bauteile betrachtet werden; vielmehr führen das Anziehen der Zylinderkopfschrauben und die wechselnden Gasdrücke in den Brennräumen zu Durchbiegungen dieser Motorbauteile, d. h. letztlich dazu, dass der von den Motorbauteil-Dichtflächen begrenzte, die Zylinderkopfdichtung aufnehmende Dichtspalt nicht die Gestalt einer dünnen, plan-parallelen Platte behält. Auf die Topographie der im Motorbetrieb den Dichtspalt begrenzenden Motorbauteil-Dichtflächen haben aber auch noch einen Einfluss die im Motorbetrieb örtlich unterschiedlichen Wärmedehnungen von Motorblock und Zylinderkopf sowie die örtlich unter-schiedliche Bauteilsteifigkeit dieser beiden Motorbauteile in an deren Dichtflächen angrenzenden Bereichen. Die Formgebung der Dichtungsplatte der Zylinderkopfdichtung nach der EP-0 485 693-B1 beruht nun auf dem Grundgedanken, die Form der Dichtungsplatte in den für die Abdichtung wirksamen Bereichen an die Topographie der Motorbauteil-Dichtflächen anzupassen, wie sie nach dem Anziehen der Zylinderkopfschrauben, d. h. nach dem Einbau der Zylinderkopfdichtung, gegeben ist, und die für die Aufrechterhaltung der Abdichtung im Motorbetrieb erforderlichen elastischen Bauteilverformungen nicht an bzw. in der Zylinderkopfdichtung auftreten zu lassen, sondern vielmehr an bzw. in den Motorteilen Motorblock und Zylinderkopf, so dass sich die Dichtungsplatte aus einem Werkstoff herstellen lässt, welcher beim Anziehen der Zylinderkopfschrauben und im Motorbetrieb standfest, d. h. nicht dickenverformbar ist. Dieses Grundkonzept für die Gestaltung einer Zylinderkopfdichtung schließt natürlich nicht aus, dass die Dichtungsplatte mit einer Kunststoffbeschichtung versehen ist, welche der sogenannten Mikroabdichtung dient und sich an Oberflächenrauhigkeiten der Motorbauteil-Dichtflächen anpassen kann.

Aus der vorstehenden Erläuterung der Zylinderkopfdichtung nach der EP-0 485 693-B1 ergibt sich, daß deren Grundprinzip im Gegensatz steht zu der Funktion der herkömmlichen (ein- oder mehrlagigen) metallischen Zylinderkopfdichtungen, welche in den abdichtenden Bereichen mit federelastisch höhenverformbaren Sicken versehen sind.

Es gibt nun Einsatzfälle von Zylinderkopfdichtungen, in denen eine Zylinderkopfdichtung der eingangs erwähnten Art mit einer als starr zu betrachtenden Dichtungsplatte nicht zu optimalen Ergebnissen führt: Bei einem Hubkolben-Verbrennungsmotor mit einem sogenannten Kettenkasten wird letzterer häufig von einem an den Motorblock angrenzenden Kettenkasten-Unterteil und einem an den Zylinderkopf angrenzenden Kettenkasten-Oberteil gebildet, wobei eines der beiden Teile auch an das benachbarte Bauteil Motorblock oder Zylinderkopf angeformt sein kann; der Dichtspalt wird dann vom Motorblock, dem Zylinderkopf und mindestens einem Kettenkastenteil begrenzt. Soll auch der Hohlraum des Kettenkastens ganz oder teilweise durch die Zylinderkopfdichtung abgedichtet werden, erstreckt sich diese auch über mindestens einen Bereich des als separates Bauteil gefertigten Kettenkastenteils. Fertigungstoleranzen haben aber nicht selten zur Folge, daß die der Zylinderkopfdichtung zugewandte Dichtfläche des als separates Bauteil gefertigten Kettenkastenteils nach dessen Montage mit der angrenzenden Dichtfläche des Motorblocks bzw. des Zylinderkopfs nicht exakt fluchtet, so daß an der Stoßstelle von Kettenkastenteil und Motorblock bzw. Zylinderkopf der durch die Zylinderkopfdichtung abzudichtende Dichtspalt eine stufenförmige Erweiterung oder Verschmälerung aufweist und mit einer eine starre Dichtungsplatte aufweisenden Zylinderkopfdichtung nur schwer abzudichten ist - führen Fertigungstoleranzen beispielsweise dazu, daß der Dichtspalt im Bereich des Kettenkastens enger ist als zwischen Motorblock und Zylinderkopf, kann eine Zylinderkopfdichtung mit einer starren Dichtungsplatte dazu führen, daß in dem zwischen Motorblock und Zylinderkopf liegenden Dichtspaltbereich die spezifischen Flächenpressungen zwischen der Zylinderkopfdichtung und dem Motorblock einerseits sowie dem Zylinderkopf andererseits zumindest bereichsweise für eine zuverlässige Abdichtung unter allen Betriebsbedingungen nicht ausreichen. Wenn eine Zylinderkopfdichtung der eingangs erwähnten Art mehrere, verhältnismäßig nahe beieinanderliegende Durchgangsöffnungen aufweist, welche gegeneinander und gegenüber der Umgebung durch mehrere, ungefähr streifen- oder linienförmige, aneinanderstoßende oder ineinander übergehende Dichtungs-Dichtflächen abgedichtet werden sollen, kann das aus Zylinderkopfdichtung und Motorbauteil-Dichtflächen bestehende System unter Umständen in einem solchen Bereich statisch überbestimmt sein und zu einer mangelhaften Abdichtung führen. Außerdem kann es zu dauerhaften Verformungen der Motorblock-Dichtfläche in denjenigen Bereichen des Motorblocks kommen, in denen die Zylinderkopfschrauben angreifen, was insbesondere beim Austausch der Zylinderkopfdichtung bei Verwendung einer eine starre Dichtungsplatte aufweisenden Austauschdichtung gleichfalls zu Problemen führen kann.

Der Erfindung lag deshalb die Aufgabe zugrunde, eine verbesserte Zylinderkopfdichtung der eingangs erwähnten Art zu schaffen, mit der sich die geschilderten Probleme beseitigen oder zumindest abmildern lassen.

Zu diesem Zweck wird eine solche Zylinderkopfdichtung erfindungsgemäß so gestaltet, daß der bzw. mindestens ein Grundkörper in mindestens einem zweiten Abschnitt in Längserstreckung wenigstens einer der insbesondere ungefähr streifen- oder linienförmigen Dichtungs-Dichtflächen unter der maximalen, beim Einbau der Zylinderkopfdichtung und/oder im Motorbetrieb auftretenden Belastung höhenverformbar ist, sei es, weil in einem solchen zweiten Abschnitt der Grundkörper anders dimensioniert und/oder im Querschnitt anders gestaltet ist als in einem ersten, nicht höhenverformbaren Abschnitt, oder weil der Grundkörper in einem solchen zweiten Abschnitt andere Werkstoffeigenschaften besitzt als in einem nicht höhenverformbaren ersten Abschnitt.

Eine alternative erfindungsgemäße Lösung definiert der beigefügte Anspruch 2.

Eine erfindungsgemäße Zylinderkopfdichtung kombiniert also das Grundkonzept der aus der EP-0 485 693-B1 bekannten Zylinderkopfdichtung und deren Vorteile mit einem Merkmal, welches dazu führt, daß sich die erfindungsgemäße Zylinderkopfdichtung in ausgewählten Bereichen an Veränderungen in der Topographie der Motorbauteil-Dichtflächen, welche sich beim Anziehen der Zylinderkopfschrauben, d. h. bei der Montage der Zylinderkopfdichtung, und/oder beim ersten Warmlaufen des Motors, gegebenenfalls aber auch noch in einer anfänglichen Betriebszeit des Motors ergeben können, anpassen kann; ferner ist eine erfindungsgemäße Zylinderkopfdichtung gegebenenfalls in der Lage, Fertigungstoleranzen auszugleichen und sich insbesondere beim Einbau einer Ersatzdichtung an im Motorbetrieb erfolgte dauerhafte Veränderungen der Motorbauteil-Dichtflächen anzupassen.

Im Zusammenhang mit der eingangs erfolgten Definition der Gattung von Zylinderkopfdichtungen, mit denen sich die vorliegende Erfindung befaßt, ist noch auf folgendes hinzuweisen: Anstelle eines einzigen Zylinderkopfs könnte auch für jeden einzelnen Zylinder eine Zylinderkopf vorgesehen sein, wie dies bei Nutzfahrzeugmotoren häufig der Fall ist. Die erwähnten Motorbauteil-Dichtflächen können nicht nur vom Motorblock und mindestens einem Zylinderkopf gebildet werden, sondern z. B. auch von einem Kettenkastenteil oder mehreren Kettenkastenteilen. Vorteilhafterweise wird man die genannten Erhebungen nicht nur auf einer Seite der Zylinderkopfdichtung vorsehen, sondern auf beiden Seiten der Dichtung, so daß dann das Dickenprofil der Zylinderkopfdichtung mindestens bereichsweise entsprechend der Dichtspalt-Topographie gestaltet ist. Der von der Erfindung betroffene Dichtungstyp kann zwar eine Dichtungsplatte im herkömmlichen Sinne aufweisen, ebenso ist es aber möglich, mehrere Dichtungssegmente vorzusehen, an denen die die Dichtungs-Dichtflächen bildenden Erhebungen vorgesehen sind, und die Dichtungssegmente über Verbindungsstege oder dergleichen miteinander zu verbinden, so daß ein skelettartiger Aufbau entsteht. Wenn davon die Rede ist, daß die erfindungsgemäße Zylinderkopfdichtung Erhebungen aufweist, welche streifen- oder linienförmige Dichtungs-Dichtflächen bilden, folgt aus dieser Formulierung, daß nicht alle an der Dichtung ausgebildeten Erhebungen solche streifen- oder linienförmigen Dichtungs-Dichtflächen bilden müssen. Die Dichtungs-Dichtflächen können - in einer Draufsicht - auch in ihrer Breite ein Profil aufweisen. Eine erfindungsgemäße Zylinderkopfdichtung kann einen oder mehrere der erwähnten Grundkörper aufweisen, welche voneinander getrennt oder einstückig miteinander verbunden sein können, so wie dies beispielsweise dann der Fall ist, wenn eine metallische Dichtungsplatte nach einem Prägevorgang stegartige Erhebungen bildet, welche derartige Grundkörper darstellen. Weist eine erfindungsgemäße Zylinderkopfdichtung mehrere Grundkörper auf, könnte auch nur ein einziger Grundkörper erfindungsgemäß gestaltet sein, auch wenn z. B. alle Grundkörper Teile einer einzigen Dichtungsplatte sind.

Erwähnenswert ist noch, daß eine erfindungsgemäße Zylinderkopfdichtung natürlich nicht "altern" soll, d. h. der zweite Abschnitt bzw. die zweiten Abschnitte des mindestens einen Grundkörpers sollen zwar unter einer gewissen, vergleichsweise hohen Belastung (plastisch und/oder elastisch) höhenverformbar, und zwar bevorzugt plastisch, gegebenenfalls auch nur überwiegend plastisch, verformbar, jedoch so ausgebildet sein, daß ein solcher zweiter Grundkörper-Abschnitt nach einer gewissen Höhenverformung und der damit einhergehenden Verringerung der Belastung standfest, d. h. unter der verringerten Belastung nicht weiter höhenverformbar ist. Entsprechendes gilt für den höhenverformbaren Grundkörper gemäß Anspruch 2, der aber auch nur elastisch höhenverformbar sein kann; außerdem kann auch dieser Grundkörper mit der erwähnten Beschichtung und/oder mit der noch zu erwähnenden Deckschicht versehen sein.

Entsprechend dem letzten Absatz der Beschreibung und dem Anspruch 5 der EP-0 485 693-B1 (siehe aber auch die WO 01/16240-A1) kann es sich empfehlen, eine erfindungsgemäße Zylinderkopfdichtung so zu gestalten, daß an den Erhebungen die Beschichtung mindestens bereichsweise mit einer im Mikrobereich verformbaren Deckschicht versehen ist, damit auch an Motorbauteil-Dichtflächen mit einer gewissen Oberflächenrauhigkeit zuverlässig abgedichtet werden kann, wobei die Schichtdicke dieser verformbaren Deckschicht nur ein Bruchteil der Schichtdicke der Grundkörper-Beschichtung sein soll. Ohne eine Deckschicht bildet also die Grundkörper-Beschichtung die betreffende Dichtungs-Dichtfläche, im anderen Fall wird letztere durch die Deckschicht gebildet.

Obwohl, wie sich aus der EP-0 485 693-B1 ergibt, auch andere feste Werkstoffe in Frage kommen, handelt es sich bei dem Grundkörper-Werkstoff vorzugsweise um einen metallischen Werkstoff.

Als Grundkörper-Beschichtung empfiehlt sich eine Kunststoffbeschichtung, obwohl grundsätzlich auch eine metallische oder metallähnliche Beschichtung denkbar wäre. Entsprechendes gilt für die der Mikroabdichtung dienende Deckschicht.

Die Grundkörper-Beschichtung dient vor allem dem Zweck, insbesondere im Falle eines metallischen Grundkörpers einen unmittelbaren Kontakt des letzteren mit einer der gleichfalls metallischen Motorbauteil-Dichtflächen zu vermeiden. Andererseits soll die Grundkörper-Beschichtung im Motorbetrieb verschleißfest sein, weshalb empfohlen wird, für diese Beschichtung ein solches Material zu wählen, daß die Beschichtung unter der maximalen, beim Einbau der Zylinderkopfdichtung sowie im Motorbetrieb auftretenden Belastung zumindest im wesentlichen, vorzugsweise aber tatsächlich druck- und kriechfest ist, um so zu verhindern, daß im Laufe des Motorbetriebs der eigentliche Grundkörper mit einer der Motorbauteil-Dichtflächen in direkten Kontakt kommen kann.

Im Motorbetrieb treten nahezu unvermeidbar Schiebebewegungen zwischen der Zylinderkopfdichtung und Motorbauteil-Dichtflächen auf, welche zu Verschleißerscheinungen an der Dichtung und/oder an den Motorbauteil-Dichtflächen führen können. Deshalb besteht bei bevorzugten Ausführungsformen der erfindungsgemäßen Zylinderkopfdichtung die Grundkörper-Beschichtung aus einem solchen Material, daß unter den erwähnten Schiebebewegungen die Gleitreibung zwischen Grundkörper-Beschichtung und den Motorbauteil-Dichtflächen kleiner ist als im Fall eines unmittelbaren Kontakts des Grundkörpers mit den Motorbauteil-Dichtflächen.

Für die Erzielung der Druckfestigkeit und der Verringerung der Gleitreibung geeignete Beschichtungsmaterialien lassen sich der WO 01/16240-A1 entnehmen.

Durch die Grundkörper-Beschichtung und die der Mikroabdichtung dienende Deckschicht ergibt sich bei bevorzugten Ausführungsformen der erfindungsgemäßen Zylinderkopfdichtung ein Härteabfall der Oberfläche der Erhebungen zu, so daß die Zylinderkopfdichtung an der Oberfläche der die Beschichtung aufweisenden Erhebungen eine Härte aufweist, welche kleiner ist als die Härte der Beschichtung an deren dem Grundkörper zugewandten Seite. Beschichtungen mit dieser Eigenschaft lassen sich gleichfalls der WO 01/16240-A1 entnehmen.

Wie sich aus den vorstehenden Erläuterungen zu den durch die Erfindung zu minimierenden Problemen ergibt, ist bei vorteilhaften Ausführungsformen der erfindungsgemäßen Zylinderkopfdichtung der Grundkörper in der Nachbarschaft mindestens einer Schraubenöffnung vorzugsweise plastisch höhenverformbar.

Aus diesen Ausführungen ergibt sich auch, daß bei einer Zylinderkopfdichtung mit einer einem Kettenkasten zugeordneten Aussparung und einer in der Nachbarschaft des Aussparungsrands verlaufenden Dichtungs-Dichtfläche vorteilhafterweise der dieser Dichtungs-Dichtfläche zugeordnete Grundkörper mindestens bereichsweise höhenverformbar ist.

Das Höhenprofil der vorzugsweise ungefähr streifen- oder linienförmigen Dichtungs-Dichtflächen kann am Grundkörper ausgeformt sein, so daß der Grundkörper ein dem Höhenprofil der von ihm getragenen Dichtungs-Dichtfläche entsprechendes Höhenprofil aufweist und die Beschichtung bzw. die Beschichtungen von gleichmäßiger Schichtdicke sind, es ist aber auch möglich, zumindest einen Höhenanteil des Höhenprofils durch eine Beschichtung mit variierender Schichtdicke zu erzeugen, wobei sich Ausführungsformen empfehlen, bei denen die Beschichtung eine dem Höhenprofil der Dichtungs-Dichtfläche entsprechend variierende Schichtdicke aufweist, damit nicht sowohl der Grundkörper, als auch die Beschichtung höhenprofiliert werden müssen. Beschichtungen mit variierender Schichtdicke sind aus der Dichtungstechnik an sich bekannt und lassen sich beispielsweise durch Siebdruckähnliche Verfahren erzeugen.

Es sei schließlich noch darauf hingewiesen, daß der Kamm eines höhenverformbaren Grundkörpers oder Grundkörper-Abschnitts auf einem anderen Höhenniveau liegen kann als der Kamm eines benachbarten, nicht höhenverformbaren Grundkörpers oder Grundkörper-Abschnitts, z. B. dann, wenn im Zuge des Dichtungseinbaus zunächst der höhenverformbare Grundkörper bzw. Grundkörper-Abschnitt zum Tragen kommen und verformt werden soll, ehe es zu der erforderlichen Dichtflächenpressung am nicht höhenverformbaren Grundkörper bzw. Grundkörper-Abschnitt kommt. Im Bereich des Kamms eines höhenverformbaren Grundkörpers bzw. Grundkörper-Abschnitts wird die Dicke der Zylinderkopfdichtung dann also etwas größer gewählt als die zu erwartende Höhe des Dichtspalts an dieser Stelle.

Weitere Merkmale, Vorteile und Einzelheiten der Erfindung ergeben sich aus der beigefügten zeichnerischen Darstellung sowie der nachfolgenden Beschreibung; in der Zeichnung zeigen:
- Fig. 1A: eine Draufsicht auf eine Zylinderkopfdichtung für einen Hubkolben-Verbrennungsmotor mit Kettenkasten zur Darstellung der denkbaren Dichtungs-Dichtflächenbereiche, welche erfindungsgemäß höhenverformbar sind;
- Fig. 1B: eine der Fig. 1A entsprechende Darstellung einer erfindungsgemäßen Zylinderkopfdichtung;
- Fig. 2A bis 2F: Schnitt nach der Linie 2-2 in Fig. 1, jedoch für sechs verschiedene Ausführungsformen;
- Fig. 2G: einen Schnitt nach der Linie 2'-2' in Fig. 1;
- Fig. 3A bis 3C: Schnitte durch einen rahmenartig die Brennraumöffnungen der in Fig. 1 gezeigten Zylinderkopfdichtung umschließenden Grundkörper in dem in Fig. 1 gestrichelt markierten Bereich "A", wobei es sich um Schnitte durch in Längsrichtung des Grundkörpers aufeinanderfolgende Grundkörper-Bereiche an einem Übergang von einem nicht höhenverformbaren Grundkörper-Abschnitt in einen höhenverformbaren Grundkörper-Abschnitt handelt;
- Fig. 4A bis 4C und Fig. 5A bis 5C: den Fig. 3A bis 3C entsprechende Darstellungen für zwei weitere Ausführungsformen eines Grundkörpers an einem solchen Übergang, und
- Fig. 6: einen Schnitt durch einen an eine abzudichtende Durchgangsöffnung angrenzenden Teil einer weiteren Ausführungsform.

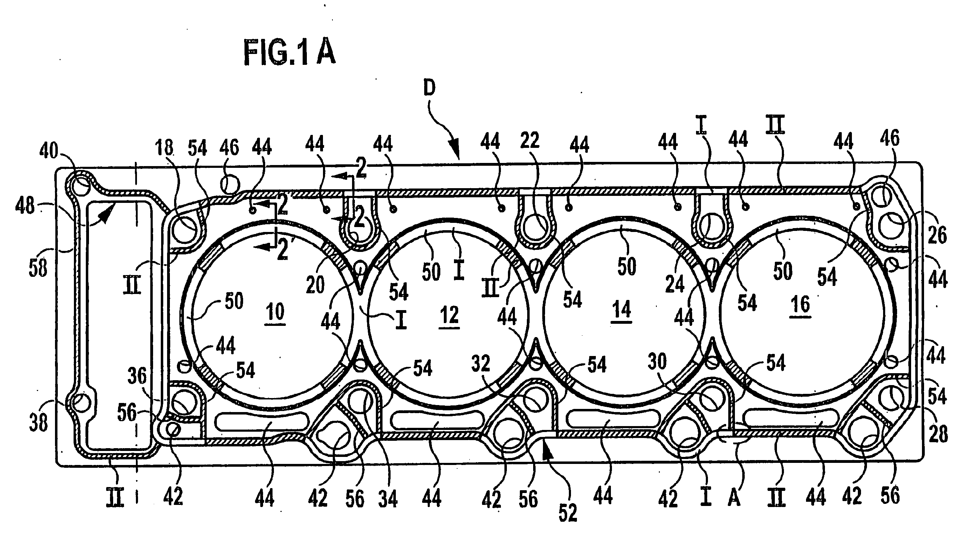

Bei der in Fig. 1A in einer Draufsicht dargestellten Zylinderkopfdichtung soll es sich um eine solche Dichtung handeln, welche zumindest im wesentlichen von einer metallischen, wenigstens partiell beschichteten Dichtungsplatte D gebildet wird, die nach einem Prägevorgang erfindungsgemäß gestaltete Grundkörper aufweist und aus der eine Vielzahl von Durchgangsöffnungen ausgestanzt wurden, nämlich vier Brennraumöffnungen 10, 12, 14, 16, Schraubenlöcher 18bis 36 für den Durchtritt von Zylinderkopfschrauben, Schraubenlöcher 38 und 40 für den Durchgang von der Montage eines Kettenkastenteils dienenden Schrauben, Öldurchgangsöffnungen 42, Wasserdurchgangsöffnungen 44 und Positionierlöcher 46 für den Durchtritt von z. B. im Motorblock festgelegten Positionierstiften. Ferner ist in dieser Zylinderkopfdichtung noch eine Kettenkastenöffnung 48 vorgesehen.

Jede der Brennraumöffnungen 10 bis 16 wird von einem Grundkörper 50 umschlossen, welcher in der Draufsicht kreisringförmig ist und zumindest auf der in Fig. 1A sichtbaren Seite der Zylinderkopfdichtung die Gestalt eines in Richtung auf den Betrachter der Fig. 1A vorstehenden, kreisringförmigen Steges hat; auf der gegenüberliegenden, in Fig. 1A nicht sichtbaren Seite der Zylinderkopfdichtung kann der Grundkörper z. B. zwei, zueinander konzentrische Kreise bildende Stege aufweisen. Bezüglich der Gestaltung dieses und aller anderen Grundkörper wird auf die weiteren Zeichnungsfiguren verwiesen. Die Grundkörper 50 und alle weiteren, im folgenden noch zu beschreibenden Grundkörper sollen bei der dargestellten Ausführungsform mit der metallischen Dichtungsplatte D einstückig und aus dieser durch Prägen ausgeformt worden sein. Wie die Fig. 1A erkennen läßt, gehen bei dieser Ausführungsform die vier Grundkörper 50 in den zwischen den Brennraumöffnungen 10 bis 16 liegenden stegartigen Bereichen der Dichtungsplatte D erfindungsgemäß ineinander über.

Ein zweiter Grundkörper 52, für den hinsichtlich seiner Querschnittsgestaltung und Herstellung vorzugsweise dasselbe gelten soll wie für den Grundkörper 50, umschließt als ungefähr rahmenförmiges Gebilde alle Brennraumöffnungen 10 bis 16, die Schraubenlöcher 18 bis 36, alle Öl- und Wasserlöcher 42 bzw. 44 sowie das eine Positionierloch 46.

Auf der Dichtungsplatte D ist eine Anzahl weiterer Grundkörper ausgeformt, welche bei der dargestellten Ausführungsform im Gegensatz zum Grundkörper 52 keine in sich geschlossenen Linienzüge bilden, sondern am Grundkörper 52 bzw. an einem anderen der weiteren Grundkörper enden, aber in letzteren fugenlos übergehen. Bei bevorzugten Ausführungsformen bildet aber jeder dieser weiteren Grundkörper zusammen mit dem Grundkörper 52 oder zusammen mit einem anderen der weiteren Grundkörper einen in sich geschlossenen Linienzug (natürlich in einer Draufsicht auf die Zylinderkopfdichtung). Bei diesen weiteren Grundkörpern handelt es sich um die folgenden:

Erste weitere Grundkörper 54 umschließen zusammen mit dem rahmenförmigen Grundkörper 52 jeweils ein Schraubenloch 34, wobei einige dieser Grundkörper 54 - zusammen mit dem Grundkörper 52 - auch noch eine weitere Durchgangsöffnung umschließen, nämlich entweder ein Ölloch 42 oder das eine Positionierloch 46. Soweit einer dieser ersten weiteren Grundkörper 54 sowohl der Abdichtung um ein Schraubenloch 34 herum, als auch der Abdichtung um ein Ölloch 42 herum dient, ist jeweils ein zweiter weiterer Grundkörper 56 vorgesehen, welcher einerseits am Grundkörper 52 und andererseits am benachbarten Grundkörper 54 endet und so das betreffende Ölloch gegenüber dem benachbarten Schraubenloch abdichtet.

Ein dritter weiterer Grundkörper 58 umschließt die Kettenkastenöffnung 48 auf drei Seiten und umfaßt auch die beiden Schraubenlöcher 38 und 40; dieser dritte weitere Grundkörper 58 endet am rahmenförmigen Grundkörper 52, um so die Kettenkastenöffnung 48 ringsum abdichten zu können.

In Fig. 1A wurden nicht höhenverformbare Abschnitte der verschiedenen Grundkörper mit I bezeichnet, während gemäß der Erfindung höhenverformbare zweite Grundkörper-Abschnitte im Gegensatz zu den Abschnitten I schraffiert und mit II bezeichnet wurden. Die Fig. 1A läßt in diesem Zusammenhang auch erkennen, daß die vorstehend erwähnten weiteren Grundkörper 54, 56 und 58 insgesamt höhenverformbar sein sollen, wobei im Hinblick auf die generelle Definition der vorliegenden Erfindung (Anspruch 1) erwähnt sei, daß alle diese weiteren Grundkörper auch als Teile des Grundkörpers 52 betrachtet werden können, da sie in den Grundkörper 52 übergehen.

Die Fig. 1A soll keine in der Praxis einsetzbare erfindungsgemäße Dichtung darstellen, sondern sie dient nur dem Zweck, bei dem gezeichneten Dichtungstyp alle diejenigen Grundkörperbereiche anzugeben, welche, wenn auch nicht in der gezeichneten Kombination, höhenverformbar gestaltet sein könnten.

Bei der Betrachtung der Fig. 1A können auch einige Prinzipien bevorzugter Ausführungsformen der vorliegenden Erfindung erkannt werden:

Für jede Brennraumöffnung sind mindestens zwei nicht höhenverformbare Grundkörper-Abschnitte vorgesehen, welche einander bevorzugt ungefähr diametral gegenüberliegen.

In den peripheren Bereichen der Zylinderkopfdichtung ist in der Nähe einer jeden Brennraumöffnung mindestens ein nicht höhenverformbarer Grundkörper-Abschnitt vorgesehen, bevorzugt weist die Zylinderkopfdichtung in ihren peripheren Bereichen jedoch in der Nähe einer jeden Brennraumöffnung wenigstens zwei nicht höhenverformbare Grundkörper-Abschnitte auf, die den beiden Längsseiten der Dichtungsplatte benachbart angeordnet sind.

Bevorzugt wird schließlich eine Gestaltung der Zylinderkopfdichtung derart, daß die den Brennraumöffnungen benachbarten Schraubenlöcher von Grundkörpern bzw. Grundkörper-Abschnitten umgeben werden, welche zumindest über einen überwiegenden Teil ihrer Länge höhenverformbar sind.

Bei eingebauter Zylinderkopfdichtung befindet sich oberhalb und/oder unterhalb derjenigen peripheren Bereiche der Zylinderkopfdichtung, welche der Kettenkastenöffnung 48 an der Schmalseite und an den beiden Längsseiten der Zylinderkopfdichtung benachbart sind, ein als separates Bauteil hergestelltes Kettenkastenteil, und der Verlauf der Stoßstelle zwischen diesem Kettenkastenteil und dem Motorblock bzw. dem Zylinderkopf wurde in Fig. 1A strichpunktiert angedeutet. Es kann nun zweckmäßig sein, im Verlauf des Grundkörpers 58 über bzw. unter dieser Stoßstelle in der Dichtungsplatte kleine Löcher vorzusehen und in diese jeweils ein elastomeres Dichtelement einzusetzen, um so im Bereich dieser Stoßstelle noch besser abzudichten.

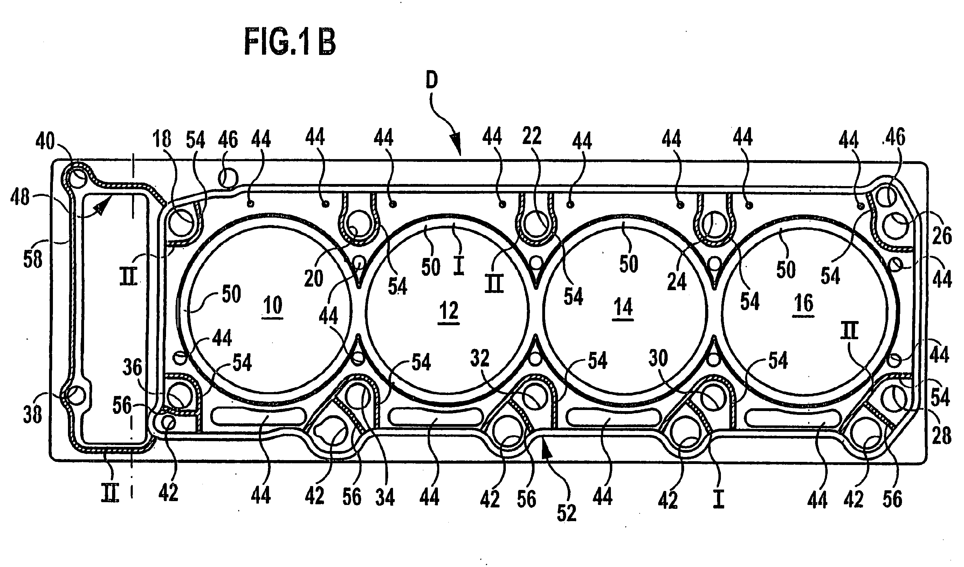

Die Fig. 1B stellt eine tatsächliche Ausführungsform einer erfindungsgemäßen Zylinderkopfdichtung mit Kettenkastenöffnung dar; die Fig. 1B unterscheidet sich von der Fig. 1A nur dadurch, daß die in Fig. 1B dargestellte Dichtung weniger erfindungsgemäß höhenverformbare Grundkörper-Abschnitte aufweist, weshalb in Fig. 1B dieselben Bezugszeichen wie in Fig. 1A verwendet wurden und die Fig. 1B ansonsten keiner weiteren Erläuterung bedarf.

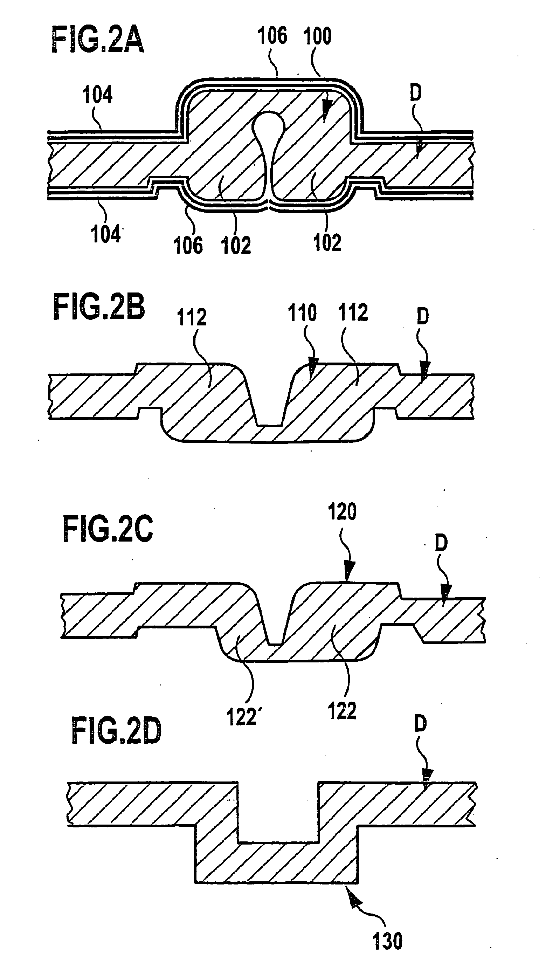

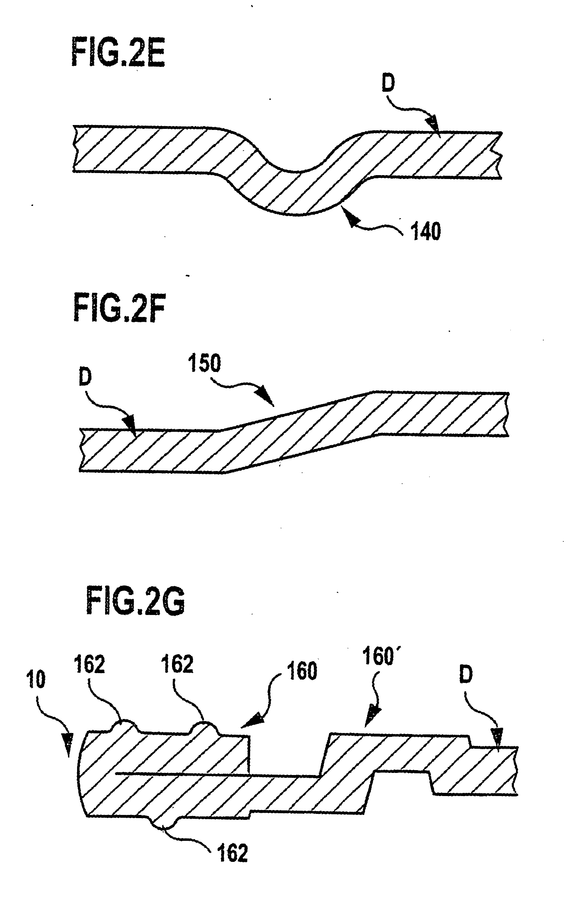

Die Fig. 2A zeigt einen Bereich der metallischen Dichtungsplatte D aus Fig. 1A oder Fig. 1B, von dem ein Teil zu einem als Ganzes mit 100 bezeichneten Grundkörper umgeformt wurde. Der Grundkörper 100 hat einen ungefähr Omega-förmigen Querschnitt mit zwei drucksteifen, d. h. beim Einbau der Dichtung und im Motorbetrieb nicht höhenverformbaren Stützstegen 102 und bildet auf jeder Seite der Dichtungsplatte D eine Erhebung, wobei auf der einen Seite der Dichtungsplatte die Erhebung infolge des Omega-förmigen Querschnitts in Längsrichtung des Grundkörpers geteilt ist. Damit der Grundkörper 100 in der Praxis nicht höhenverformbar ist, müssen natürlich die Wandstärken der Stützstege 102, d. h. die gemäß Fig. 2A horizontal gemessene Breite der Stützstege, hinreichend groß sein.

In der Fig. 2A wurden auch die erfindungsgemäß vorgesehene Beschichtung 104 und die bei bevorzugten Ausführungsformen der Erfindung vorhandene Deckschicht 106 angedeutet; die Beschichtung kann sich über die gesamten beiden Hauptoberflächen der Zylinderkopfdichtung erstrecken, aber auch nur über die vom Grundkörper 100 auf beiden Seiten der Dichtungsplatte D gebildeten Erhebungen, und gleiches gilt für die Deckschicht 106.

In allen weiteren Zeichnungsfiguren wurden die erfindungsgemäß vorzusehende Beschichtung und die bei bevorzugten Ausführungsformen vorhandene Deckschicht der Einfachheit halber weggelassen.

Die Fig. 2B zeigt wieder einen Bereich der Dichtungsplatte D, von dem ein Teil zu einem als Ganzes mit 110 bezeichneten Grundkörper umgeformt wurde. Der Grundkörper 110 hat dabei einen ungefähr V-förmigen Querschnitt und bildet gleichfalls zwei aufgrund ihrer Dimensionierung nicht höhenverformbare Stützstege 112.

Die Fig. 2C zeigt einen Bereich der Dichtungsplatte D, von dem ein Teil zu einem als Ganzes mit 120 bezeichneten Grundkörper umgeformt wurde, welcher einen asymmetrischen Querschnitt mit einem nicht höhenverformbaren Stützsteg 122 sowie einem schwächer dimensionierten und deshalb höhenverformbaren Stützsteg 122' aufweist. Unter den Einsatzbedingungen der Zylinderkopfdichtung kann der Stützsteg 122 auf beiden Seiten der Dichtung nicht höhenverformbare streifenförmige Dichtungs-Dichtflächen bilden, der Stützsteg 122' jedoch höhenverformbare, streifenförmige Dichtungs-Dichtflächen.

Die Fig. 2D bis 2F zeigen weitere mögliche Ausführungsformen von Grundkörpern im Querschnitt und bedürfen keiner näheren Erläuterung. In den Fig. 2D bis 2F wurden die Grundkörper jeweils als Ganzes mit 130 bzw. 140 bzw. 150 bezeichnet. Bei dem Grundkörper 130 handelt es sich um eine sogenannte Rechtecksicke, beim Grundkörper 140 um eine wie üblich im Querschnitt ungefähr kreisbogenförmig gestaltete Vollsicke und beim Grundkörper 150 um eine sogenannte Halbsicke, deren Querschnitt ungefähr einem flachgezogenen Z entspricht.

Der in Fig. 2G gezeigte Schnitt durch einen eine Brennraumöffnung (speziell die Brennraumöffnung 10) umschließenden Grundkörper läßt erkennen, daß der in Fig. 2G gezeigte Bereich der Dichtungsplatte D um die Brennraumöffnung 10 herum auf sich selbst zurückgefaltet wurde, um so einen als Ganzes mit 160 bezeichneten Grundkörper zu erzeugen. Vor dem Umfalten oder Umbördeln des später die Brennraumöffnung 10 umgebenden Randbereichs der Dichtungsplatte D wurde diese jedoch einem Prägevorgang unterworfen, um so das in Fig. 2G dargestellte Querschnittsprofil zu erzeugen, und zwar einschließlich erfindungsgemäßer linienförmiger Rippen 162 äußerst geringer Abmessungen, welche sich in Längsrichtung des Grundkörpers erstrecken und die abzudichtende Öffnung als in sich geschlossene ringförmige Gebilde umgeben. Typische Abmessungen für solche Rippen eines metallischen Grundkörper sind eine Breite von ca. 0,3 bis ca. 0,4 mm und eine Höhe von ca. 10 µm. Solche Rippen dienen der Erhöhung der spezifischen Flächenpressung zwischen Zylinderkopfdichtung und anliegender Motorbauteil-Dichtfläche bzw. anliegenden Motorbauteil-Dichtflächen, und es versteht sich von selbst, daß auf jeder Seite eines Grundkörpers auch nur eine einzige solche Rippe vorgesehen sein kann, gegebenenfalls auch nur eine einzige solche Rippe auf nur einer einzigen Seite des Grundkörpers. Die in Fig. 2A gezeigte Beschichtung 104 und die dort gleichfalls dargestellte Deckschicht 106 können auf dem Grundkörper so erzeugt werden, daß beim Betrachten der fertigen Zylinderkopfdichtung die Rippe bzw. die Rippen nicht mehr sichtbar sind - in diesem Fall ist die Schichtstärke der Beschichtung und/oder der Deckschicht natürlich nicht überall konstant.

Wie in Fig. 2G dargestellt, kann dem Grundkörper 160 benachbart ein Grundkörper 160' verlaufen, welcher die Durchgangsöffnung 10 gleichfalls umschließt; der Grundkörper 160 könnte dann um die Durchgangsöffnung 10 herum nicht höhenverformbar, jedoch mit einem Höhenprofil versehen sein, während der Grundkörper 160' um die Durchgangsöffnung herum höhenverformbar sein könnte und kein Höhenprofil aufweist.

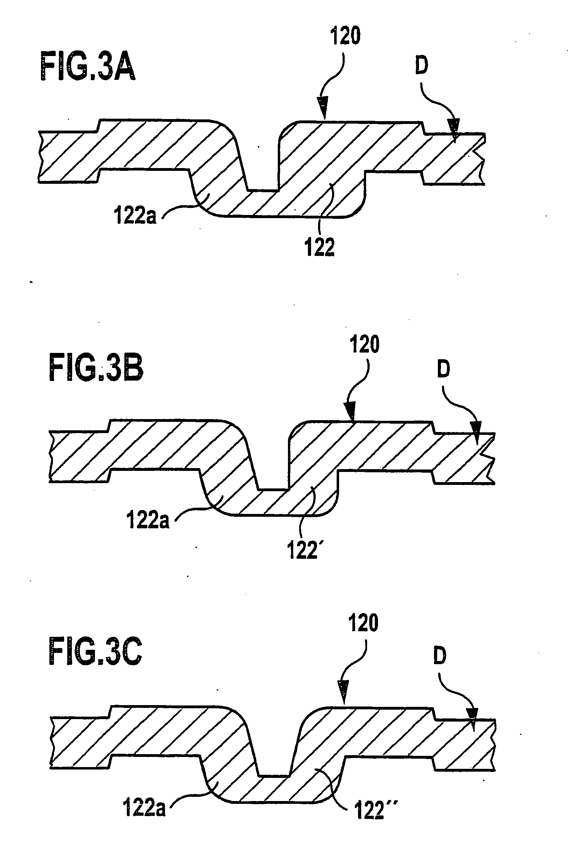

Die Fig. 3A bis 3C sollen den Übergang von einem nicht höhenverformbaren ersten Abschnitt eines Grundkörpers in einen erfindungsgemäß höhenverformbaren zweiten Abschnitt eines solchen Grundkörpers illustrieren, und zwar anhand des in Fig. 2C dargestellten Grundkörpers 120. Die Fig. 3A zeigt einen Querschnitt durch einen nicht höhenverformbaren ersten Abschnitt des Grundkörpers 120 mit dem verformungssteifen Stützsteg 122 verhältnismäßig großer Breite und einem etwas schräggestellten Stützsteg 122a geringerer Wandstärke. Die Fig. 3B zeigt einen Querschnitt durch einen Bereich des Grundkörpers 120, welcher dem in Fig. 3A im Querschnitt dargestellten Bereich benachbart ist. In dem in Fig. 3B dargestellten Bereich ist die Wandstärke des in der Zeichnung rechten Stützstegs bereits deutlich geringer als in Fig. 3A, weshalb in Fig. 3B dieser rechte Stützsteg mit 122' bezeichnet wurde. Sowohl in Fig. 3A, als auch in Fig. 3B steht der rechte Stützsteg 122 bzw. 122' jedoch noch ungefähr senkrecht zu der von der Dichtungsplatte D definierten Ebene. Die Fig. 3C zeigt schließlich einen Schnitt durch den Grundkörper 120 in einem Bereich, welcher dem in Fig. 3B dargestellten Bereich benachbart ist, wobei die drei in den Fig. 3A, 3B und 3C dargestellten Bereiche in dieser Reihenfolge aufeinanderfolgen (in Längsrichtung des Grundkörpers 120). In Fig. 3C weist der rechte, mit 122" bezeichnete Stützsteg noch dieselbe Wandstärke auf wie der in Fig. 3B gezeigte rechte Stützsteg 122', jedoch verläuft in Fig. 3C der rechte Stützsteg 122" etwas schräg, wodurch die Höhenverformbarkeit des Grundkörpers 120 erhöht wird. In allen drei in den Fig. 3A, 3B und 3C dargestellten Bereichen ist der linke Stützsteg 122a gleich dimensioniert und gleich orientiert, da die Verformungssteifigkeit des in Fig. 3A dargestellten Bereichs auf der Wandstärke und Orientierung des rechten Stützstegs 122 beruht.

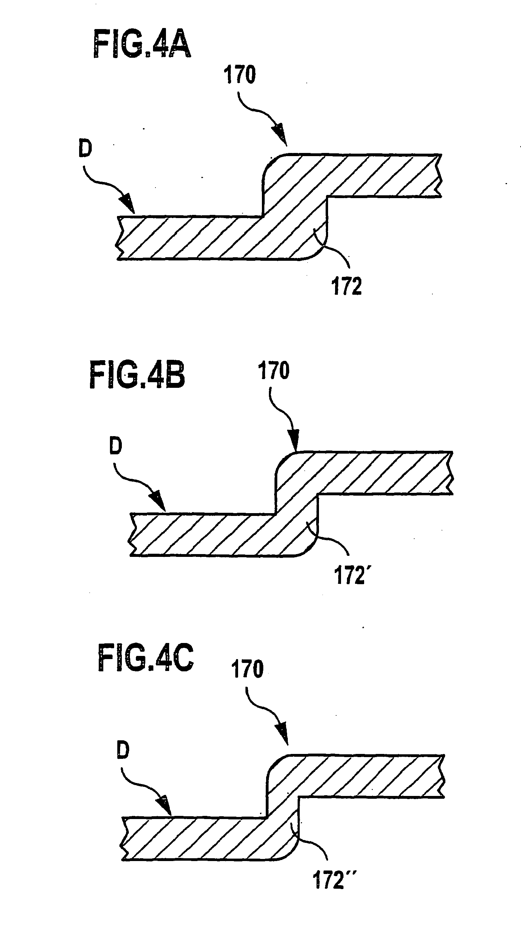

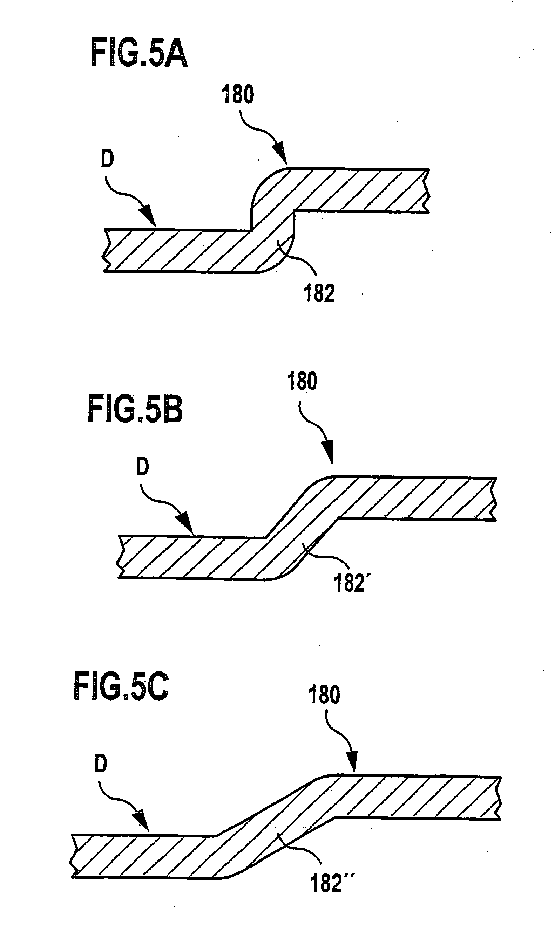

Die Fig. 4A bis 4C sowie die Fig. 5A bis 5C zeigen in derselben Abfolge wie die Fig. 3A bis 3C zwei weitere Ausführungsformen eines Grundkörpers, und zwar den Übergang des jeweiligen Grundkörpers von einem nicht höhenverformbaren Abschnitt in einen erfindungsgemäß höhenverformbaren Abschnitt. In beiden Ausführungsformen hat der Grundkörper die Gestalt einer sogenannten Halbsicke.

In dem in Fig. 4A dargestellten Bereich eines Grundkörpers 170 ist dieser noch nicht höhenverformbar und hat einen aufrechtstehenden Stützsteg 172 verhältnismäßig großer Breite bzw. Wandstärke; letztere wird beim Übergang von einem nicht höhenverformbaren ersten Abschnitt in einen höhenverformbaren zweiten Abschnitt des Grundkörpers 170 insbesondere kontinuierlich verringert, wie die Stützstege 172' und 172" in den Fig. 4B und 4C erkennen lassen. Bei der dargestellten Ausführungsform bleibt die Orientierung des Stützstegs unverändert.

In den Fig. 5A bis 5C ist ein Grundkörper 180 dargestellt, bei dem die Wandstärke eines Stützstegs 182 bzw. 182' bzw. 182" längs des Übergangs von einem nicht höhenverformbaren Abschnitt des Grundkörpers in einen höhenverformbaren Grundkörper-Abschnitt unverändert bleibt, hingegen erfolgt ein Übergang von einem aufrechtstehenden Stützsteg 182 in einen mehr und mehr geneigten Stützsteg 182' bzw. 182", so daß sich der Grundkörper 180 unter den beim Einbau der Zylinderkopfdichtung aufgebrachten Belastungen in demjenigen Abschnitt bzw. in denjenigen Abschnitten höhenverformen, d. h. abflachen läßt, in dem bzw. in denen der Grundkörper den in Fig. 5C dargestellten Querschnitt aufweist.

Zum Beispiel der in Fig. 2C dargestellte Querschnitt könnte auch so interpretiert werden, daß er einen ersten Grundkörper in Form des Stützstegs 122 und einen zweiten Grundkörper in Form des Stützstegs 122' bildet, welche gemäß Anspruch 2 gestaltet sein könnten, nämlich mit einem rings um eine abzudichtende Öffnung herum nicht höhenverformbaren, jedoch mit einem Höhenprofil versehenen Grundkörper in Form des Stützstegs 122 und einem um die abzudichtende Öffnung herum höhenverformbaren, jedoch nicht höhenprofilierten Grundkörper in Form des Stützstegs 122'.

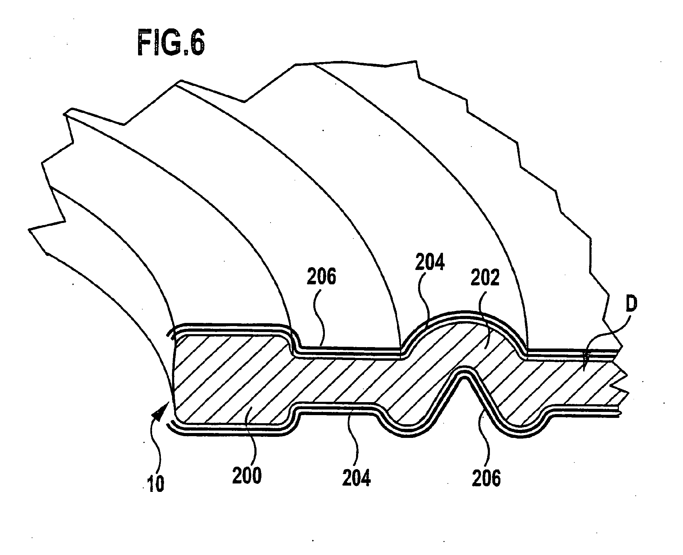

In Fig. 6 ist nun ein Schnitt durch eine weitere Ausführungsform dargestellt, bei dem es sich um einen Schnitt nach der Linie 2'-2' in Fig. 1A handeln könnte, so daß links von dem in Fig. 6 dargestellten Teil einer Dichtungsplatte D die Brennraumöffnung 10 liegen würde. An diese grenzt unmittelbar ein erster Grundkörper 200 an, welcher rings um die Brennraumöffnung 10 nicht höhenverformbar, jedoch mit einem der Dichtspalt-Topographie entsprechenden Höhenprofil versehen sein soll. Bezüglich der Brennraumöffnung 10 radial außerhalb des ersten Grundkörpers 200 ist an der Dichtungsplatte D ein zweiter Grundkörper 202 ausgeformt, welcher die Gestalt einer herkömmlichen Vollsicke hat und um die Brennraumöffnung 10 herum höhenverformbar sein soll, jedoch kein Höhenprofil aufweist. Wie in Fig. 2A wurden in Fig. 6 eine erfindungsgemäße Beschichtung 204 sowie eine erfindungsgemäße Deckschicht 206 dargestellt, welche auf beiden Seiten der Dichtung sowohl auf dem Grundkörper 200, als auch auf dem Grundkörper 202 vorgesehen sind. Die in Fig. 6 dargestellte Ausführungsform könnte aber auch so abgewandelt werden, daß der Grundkörper 202 keinerlei Beschichtung aufweist oder nur die der Mikroabdichtung dienende Deckschicht 206. Die in Fig. 6 dargestellte Ausführungsform realisiert also die erfindungsgemäße Lösung gemäß Anspruch 2.

Zur Fig. 1A ist noch zu bemerken, daß der Grundkörper 58 in der Nähe der benachbarten Schmalseite der Dichtungsplatte D nicht unbedingt höhenverformbar sein muß, weil die dort über bzw. unter der Zylinderkopfdichtung liegenden Bereiche der benachbarten Motorbauteile durch die sich durch die Schraubenlöcher 38 und 40 erstreckenden Schrauben gegebenenfalls einer für die Problemlösung hinreichenden Biegeverformung unterworfen werden. Bei der Beurteilung der Erfindung muß man sich vor Augen halten, daß jede Zylinderkopfdichtung für einen ganz bestimmten Motor konstruiert wird, d. h. dem Dichtungskonstrukteur sind die bei der Montage der Zylinderkopfdichtung und im Motorbetrieb auftretenden Formänderungen der Motorbauteile ebenso bekannt wie die vom Motorhersteller vorgegebenen Anzugsdrehmomente der dem Einspannen der Dichtung dienenden Schrauben. Dies macht es möglich, die Topographie des sich bei eingebauter Zylinderkopfdichtung ergebenden Dichtspalts mittels einer FEM-Berechnung zu bestimmen und die Zylinderkopfdichtung entsprechend zu gestalten und zu bemessen. Alternativ könnte hierzu zu dem in der EP-0 485 693-B1 beschriebenen Verfahren gegriffen werden, wonach eine Musterplatte zwischen die Motorbauteile eingespannt und dabei entsprechend plastisch verformt wird, um so die Dichtspalt-Topographie abzuformen und danach die Dichtung zu gestalten.

Die vorliegende Erfindung wurde mit Bezug auf eine Zylinderkopfdichtung beschrieben und beansprucht. Die erfindungsgemäßen Gestaltungen und Bemessungen lassen sich aber auch bei anderen Flachdichtungen anwenden, insbesondere bei anderen, in Verbindung mit Verbrennungsmotoren eingesetzten Flachdichtungen, wobei von besonderer Bedeutung die folgenden Anwendungsfälle sind: eine Auspuffkrümmerdichtung zur Abdichtung zwischen einem Auspuffkrümmer und einem Zylinderkopf, Flanschdichtungen zum Einbau in einen Abgasstrang, sogenannte Zylinderfußdichtungen, welche insbesondere bei Boxermotoren am Übergang zwischen einem Zylinderblock und einem Kurbelgehäuse eingesetzt werden, sowie Flachdichtungen zur Abdichtung an Zylinderlaufbuchsen, sei es unter einem Laufbuchsenflansch und/oder am vom Zylinderkopf abgewandten unteren Ende einer Zylinderlaufbuchse.

## Patentansprüche

1. Zylinderkopfdichtung mit mehreren Durchgangsöffnungen, welche mindestens Brennraumöffnungen (10, 12, 14, 16) und Schraubenöffnungen (18, 20,..., 36) für Zylinderkopfschrauben bilden, zur Abdichtung eines von Motorbauteil-Dichtflächen mindestens eines Motorblocks und eines Zylinderkopfs begrenzten Dichtspalts, wobei die Zylinderkopfdichtung zumindest einseitig Erhebungen aufweist, welche mindestens eine Durchgangsöffnung in sich geschlossen umgebende Dichtungs-Dichtflächen zum Anpressen gegen mindestens eine Motorbauteil-Dichtfläche bilden, deren Höhenprofil vor dem Einbau der Zylinderkopfdichtung zumindest ungefähr entsprechend der Topographie des sich bei zwischen Motorbauteil-Dichtflächen eingespannter Zylinderkopfdichtung ergebenden, abzudichtenden Dichtspalts ausgebildet ist und von denen die Brennraumöffnungen (10, 12, 14, 16) jeweils einzeln umschlossen werden, wobei die Erhebungen von mindestens einem mit einer Beschichtung (104, 204) versehenen Grundkörper (50, 52, 54, 56, 58) gebildet werden, dessen Werkstoff derart ausgewählt und dessen Querschnitt derart gestaltet ist, dass der Grundkörper (50, 52, 54, 56, 58) unter der maximalen, beim Einbau der Zylinderkopfdichtung sowie im Motorbetrieb auftretenden Belastung zumindest in ersten Abschnitten (I) in Längserstreckung der Dichtungs-Dichtflächen druck- und kriechfest und damit nicht höhenverformbar ist, und wobei die Beschichtung (104, 204) eine unter den im Motorbetrieb auftretenden Belastungen und Relativbewegungen zwischen Zylinderkopfdichtung und Motorbauteil-Dichtflächen verschleißfeste Beschichtung (104, 204) ist,
**dadurch gekennzeichnet, dass** mindestens ein Grundkörper (50, 52, 54, 56, 58) in mindestens einem zweiten Abschnitt (II) in Längserstreckung wenigstens einer der Dichtungs-Dichtflächen unter der maximalen, beim Einbau der Zylinderkopfdichtung und/oder im Motorbetrieb auftretenden Belastung höhenverformbar ist.

2. Zylinderkopfdichtung mit mehreren Durchgangsöffnungen, welche mindestens Brennraumöffnungen (10, 12, 14, 16) und Schraubenöffnungen (18, 20, ..., 36) für Zylinderkopfschrauben bilden, zur Abdichtung eines von Motorbauteil-Dichtflächen mindestens eines Motorblocks und eines Zylinderkopfs begrenzten Dichtspalts, wobei die Zylinderkopfdichtung zumindest einseitig Erhebungen aufweist, welche mindestens eine Durchgangsöffnung in sich geschlossen umgebende Dichtungs-Dichtflächen zum Anpressen gegen mindestens eine Motorbauteil-Dichtfläche bilden, deren Höhenprofil vor dem Einbau der Zylinderkopfdichtung zumindest ungefähr entsprechend der Topographie des sich bei zwischen Motorbauteil-Dichtflächen eingespannter Zylinderkopfdichtung ergebenden, abzudichtenden Dichtspalts ausgebildet ist und von denen die Brennraumöffnungen (10, 12, 14, 16) jeweils einzeln umschlossen werden, wobei die Erhebungen von mindestens einem mit einer Beschichtung versehenen Grundkörper (50, 52, 54, 56, 58; 160, 160', 200, 202) gebildet werden, dessen Werkstoff derart ausgewählt und dessen Querschnitt derart gestaltet ist, dass der Grundkörper (50, 52, 54, 56, 58; 160, 160', 200, 202) unter der maximalen, beim Einbau der Zylinderkopfdichtung sowie im Motorbetrieb auftretenden Belastung zumindest im ersten Abschnitt (I) der Dichtungs-Dichtflächen druck- und kriechfest und damit nicht höhenverformbar ist, und wobei die Beschichtung eine unter den im Motorbetrieb auftretenden Belastungen und Relativbewegungen zwischen Zylinderkopfdichtung und Motorbauteil-Dichtflächen verschleißfeste Beschichtung (104, 204) ist,
**dadurch gekennzeichnet, dass** wenigstens einer Durchgangsöffnung mindestens zwei die letztere in sich geschlossen umgebende Dichtungs-Dichtflächen zugeordnet sind, deren jede einen diese Durchgangsöffnung in sich geschlossenen umgebenden Grundkörper (160, 160'; 200, 202) aufweist, wobei
(a) einer dieser Grundkörper (160; 200) unter der maximalen, beim Einbau der Zylinderkopfdichtung sowie im Motorbetrieb auftretenden Belastung um die Durchgangsöffnung herum druck- und kriechfest und damit nicht höhenverformbar sowie mit einer entsprechend der Dichtspalt-Topographie höhenprofilierte Dichtfläche bildenden Beschichtung versehen ist, und
(b) ein anderer dieser Grundkörper (160'; 202) unter der maximalen, beim Einbau der Zylinderkopfdichtung sowie im Motorbetrieb auftretenden Belastung um die Durchgangsöffnung herum höhenverformbar ist.

3. Zylinderkopfdichtung nach Anspruch 1 oder 2, **dadurch gekennzeichnet, dass** die Beschichtung (104, 204) mindestens bereichsweise mit einer im Mikrobereich verformbaren Deckschicht (106, 206) versehen ist.

4. Zylinderkopfdichtung nach einem der Ansprüche 1 bis 3, **dadurch gekennzeichnet, dass** der Grundkörper-Werkstoff ein metallischer Werkstoff ist.

5. Zylinderkopfdichtung nach einem der Ansprüche 1 bis 4, **dadurch gekennzeichnet, dass** die Beschichtung (104, 204) eine Kunststoffbeschichtung ist.

6. Zylinderkopfdichtung nach einem oder mehreren der Ansprüche 3 bis 5, **dadurch gekennzeichnet, dass** die Deckschicht (106, 206) eine Kunststoffdeckschicht ist.

7. Zylinderkopfdichtung nach einem der Ansprüche 1 bis 6, **dadurch gekennzeichnet, dass** die Beschichtung (104, 204) aus einem solchen Material besteht, dass die Beschichtung unter der maximalen, beim Einbau der Zylinderkopfdichtung sowie im Motorbetrieb auftretenden Belastung zumindest im wesentlichen druck- und kriechfest ist.

8. Zylinderkopfdichtung nach einem der Ansprüche 1 bis 7, **dadurch gekennzeichnet, dass** die Beschichtung (104, 204) aus einem solchen Material besteht, dass unter den im Motorbetrieb auftretenden Schiebebewegungen zwischen Zylinderkopfdichtung und Motorbauteil-Dichtflächen die Gleitreibung zwischen den Dichtungs-Dichtflächen und den Motorbauteil-Dichtflächen kleiner ist als im Fall eines unmittelbaren Kontakts des Grundkörpers mit den Motorbauteil-Dichtflächen.

9. Zylinderkopfdichtung nach einem der Ansprüche 1 bis 8, **dadurch gekennzeichnet, dass** die Zylinderkopfdichtung an der Oberfläche der die Beschichtung (104, 204) aufweisenden Erhebungen eine Härte aufweist, welche kleiner ist als die Härte der Beschichtung (104, 204) an deren dem Grundkörper zugewandten Seite.

10. Zylinderkopfdichtung nach einem oder mehreren der Ansprüche 1 und 3 bis 9, **dadurch gekennzeichnet, dass** der Grundkörper in der Nachbarschaft mindestens einer der Schraubenöffnungen (18, ..., 36) höhenverformbar ist.

11. Zylinderkopfdichtung nach einem der Ansprüche 1 und 3 bis 10, **dadurch gekennzeichnet, dass** der mindestens eine Grundkörper (50) der die Brennraumöffnungen (10, 12, 14, 16) umgebenden Dichtungs-Dichtflächen um die Brennraumöffnungen herum unter der maximalen, beim Einbau der Zylinderkopfdichtung sowie im Motorbetrieb auftretenden Belastung druck- und kriechfest und damit nicht höhenverformbar ist.

12. Zylinderkopfdichtung nach einem oder mehreren der Ansprüche 1 und 3 bis 11 mit einer einem Kettenkasten des Motors zugeordneten Aussparung und einer in der Nachbarschaft des Aussparungsrands verlaufenden Dichtungs-Dichtfläche, **dadurch gekennzeichnet, dass** der dieser Dichtungs-Dichtfläche zugeordnete Grundkörper (58) mindestens bereichsweise höhenverformbar ist.

13. Zylinderkopfdichtung nach einem oder mehreren der Ansprüche 1 bis 12, **dadurch gekennzeichnet, dass** der die Beschichtung (104, 204) aufweisende Grundkörper ein dem Höhenprofil der von ihm getragenen dreidimensionalen Dichtungs-Dichtfläche entsprechendes Höhenprofil aufweist.

14. Zylinderkopfdichtung nach einem oder mehreren der Ansprüche 1 bis 12, **dadurch gekennzeichnet, dass** die Beschichtung eine dem Höhenprofil der dreidimensionalen Dichtungs-Dichtfläche entsprechend variierende Schichtdicke aufweist.

15. Zylinderkopfdichtung nach einem der Ansprüche 1 bis 14, **dadurch gekennzeichnet, dass** die Dichtungs-Dichtflächen ungefähr streifen- oder linienförmig sind.

16. Zylinderkopfdichtung nach einem der Ansprüche 1 und 3 bis 15, **dadurch gekennzeichnet, dass** der mindestens eine Grundkörper dort höhenverformbar ist, wo beim Einbau der Zylinderkopfdichtung und/oder im Motorbetrieb irreversible Formänderungen der Motorbauteil-Dichtflächen auftreten.

## Claims

1. A cylinder head gasket with several passages that at least comprise combustion chamber passages (10, 12, 14, 16) and bolt passages (18, 20, ..., 36) for cylinder head bolts, for the purpose of sealing a gap bounded by the engine component sealing surfaces of at least an engine block and a cylinder head, where the cylinder head gasket includes prominences on at least one side that constitute self-contained gasket sealing surfaces, surrounding at least one passage, for pressing against at least one engine component sealing surface, whose height profile, prior to fitting the cylinder head gasket, is shaped to correspond at least approximately to the topography of the sealing gap requiring sealing that is created by the cylinder head gasket clamped between engine component sealing surfaces, and by which each of the combustion chamber passages (10, 12, 14, 16) is individually surrounded, whereby the prominences are formed of at least one main body (50, 52, 54, 56, 58) having a coating (104, 204), whose material has been selected in such a way and whose cross-section is shaped in such a way that the main body (50, 52, 54, 56, 58) is resistant to pressure and to creep at least in first sections (I) extending longitudinally of the gasket sealing surfaces under the maximum stress occurring when fitting the cylinder head gasket and during operation of the engine, and whose height therefore can not be deformed, and where the coating (104, 204) is an abrasion-resistant coating (104, 204) under the stresses and relative movements between cylinder head gasket and engine component sealing surfaces occurring during operation of the engine,
**characterized in that** the height of at least one main body (50, 52, 54, 56, 58) in at least one second section (II) extending longitudinally of at least one of the gasket sealing surfaces can be deformed under the maximum stress occurring when fitting the cylinder head gasket and/or during operation of the engine.

2. Cylinder head gasket with several passages that at least comprise combustion chamber passages (10, 12, 14, 16) and bolt passages (18, 20, ..., 36) for cylinder head bolts, for the purpose of sealing a gap bounded by the engine component sealing surfaces of at least an engine block and a cylinder head, where the cylinder head gasket includes prominences on at least one side that constitute self-contained gasket sealing surfaces, surrounding at least one passage, for pressing against at least one engine component sealing surface, whose height profile, prior to fitting the cylinder head gasket, is shaped to correspond at least approximately to the topography of the sealing gap requiring sealing that is created by the cylinder head gasket clamped between engine component sealing surfaces, and by which each of the combustion chamber passages (10, 12, 14, 16) is individually surrounded, whereby the prominences are formed of at least one main body (50, 52, 54, 56, 58; 160, 160', 200, 202) having a coating, whose material has been selected in such a way and whose cross-section is shaped in such a way that the main body (50, 52, 54, 56, 58; 160, 160', 200, 202) is resistant to pressure and to creep at least in first sections (I) of the gasket sealing surfaces under the maximum stress occurring when fitting the cylinder head gasket and during operation of the engine, and whose height therefore can not be deformed, and where the coating is an abrasion-resistant coating (104, 204) under the stresses and relative movements between cylinder head gasket and engine component sealing surfaces occurring during operation of the engine,
**characterized in that** at least two of the latter self-contained, surrounding gasket-sealing surfaces are assigned to at least one passage, each of which incorporates a self-contained main body (160, 160'; 200, 202) surrounding this passage, whereby
(a) one of these main bodies (160; 200) is resistant to pressure and creep, and whose height therefore can not be deformed under the influence of the maximum stress occurring when fitting the cylinder head gasket or during operation of the engine, and which includes a coating that forms a sealing surface with a height profile corresponding to the topography of the sealing gap, and
(b) the height of another of these main bodies (160'; 202) can be deformed under the maximum stress occurring around the passage when fitting the cylinder head gasket and during operation of the engine.

3. Cylinder head gasket according to Claim 1 or 2,
**characterized in that** the coating (104, 204) incorporates in at least some region a covering layer (106, 206) that can be microscopically deformed.

4. Cylinder head gasket according to one of Claims 1 to 3,
**characterized in that** the body of the main material is metal.

5. Cylinder head gasket according to one of Claims 1 to 4,
**characterized in that** the coating (104, 204) is a synthetic coating.

6. Cylinder head gasket according to one or more of claims 3 to 5, **characterized in that** the covering layer (106, 206) is a synthetic layer.

7. Cylinder head gasket according to one of Claims 1 to 6,
**characterized in that** the coating (104, 204) consists of such a material that the coating is at least substantially resistant to pressure and to creep under the influence of the maximum stress occurring when fitting the cylinder head gasket or during operation of the engine.

8. Cylinder head gasket according to one of Claims 1 to 7,
**characterized in that** the coating (104, 204) consists of such a material that, under the influence of the sliding movements that occur between the cylinder head gasket and the engine sealing components when the engine is in operation, the sliding friction between the gasket sealing surfaces and the engine component sealing surfaces is smaller than in the case of direct contact between the main body and the engine component sealing surfaces.

9. Cylinder head gasket according to one of Claims 1 to 8,
**characterized in that** the cylinder head gasket has a hardness on the surface of the of the prominences that incorporate the coating (104, 204) that is less than the hardness of the coating (104, 204) on the side that faces the main body.

10. Cylinder head gasket according to one or more of Claims 1 and 3 to 9, **characterized in that** the height of the main body in the neighbourhood of at least one of the bolt openings (18, ..., 36) can be deformed.

11. Cylinder head gasket according to one of Claims 1 and 3 to 10, **characterized in that** the minimum of one main body (50) of the gasket sealing surfaces that surround the combustion chamber openings (10, 12, 14, 16) in the region around the combustion chamber passages is resistant to pressure and creep under the influence of the maximum stress occurring when fitting the cylinder head gasket or during operation of the engine, and that its height can not therefore be deformed.

12. Cylinder head gasket according to one or more of Claims 1 and 3 to 11 with a cut-out associated with an engine chain-case and with a gasket sealing surface in the region of the edge of the cut-out, **characterized in that** the main body (58) associated with the gasket sealing surface has a height that can be deformed at least in certain areas.

13. Cylinder head gasket according to one or more of Claims 1 to 12, **characterized in that** the main body that has a coating (104, 204) has a height profile that corresponds to the height profile of the three-dimensional gasket sealing surface that it carries.

14. Cylinder head gasket according to one or more of Claims 1 to 12, **characterized in that** the coating has a layer thickness that varies according to the three-dimensional gasket sealing surface.

15. Cylinder head gasket according to one of Claims 1 to 14,
**characterized in that** the gasket sealing surfaces have approximately the forms of strips or lines.

16. Cylinder head gasket according to one of Claims 1 and 3 to 15, **characterized in that** the minimum of one main body has a height that can be deformed at the location where irreversible changes in the form of the engine component sealing surfaces occur when fitting the cylinder head gasket and/or during operation of the engine.

## Revendications

1. Joint de culasse avec plusieurs orifices de passage, lesquelles constituent au moins des orifices de combustion (10, 12, 14, 16) et des orifices de vis (18, 20, ... , 36) pour les vis de culasse, pour l'obturation d'un jeu d'étanchéité limité par les faces d'étanchéité de pièces de moteur au moins d'un bloc moteur et d'une culasse, sachant que le joint de culasse comporte des surélévations au moins sur une face, lesquelles constituent au moins un orifice entre des faces d'étanchéité du joint l'enveloppant hermétiquement pour la pression contre au moins une face d'étanchéité de pièce de moteur, dont le profil en hauteur avant le montage du joint de culasse se présente au moins approximativement sous une forme correspondant à la topographie du jeu d'étanchéité à obturer, résultant de la position serrée du joint de culasse entre les faces d'étanchéité du bloc-moteur et par lesquelles les orifices de combustion (10, 12, 14, 16) sont respectivement entourées individuellement, sachant que les surélévations sont constituées par au moins un corps de base (50, 52, 54, 56, 58) doté d'un revêtement (104, 204), corps de base (50, 52, 54, 56, 58) dont le matériau est sélectionnée et la section se présente sous une forme telle que le corps de base (50, 52, 54, 56, 58) soit résistant au fluage et à la pression sous la charge maximale générée lors de la mise en place du joint de culasse et lors du fonctionnement du moteur, au moins en ses premières sections (I) dans le sens de l'allongement longitudinal des faces d'étanchéité du joint de culasse et que, de ce fait, il ne soit pas déformable en hauteur, et sachant que le revêtement (104, 204) est un revêtement (104, 204) résistant à l'usure sous les charges et mouvements relatifs entre le joint de culasse et les faces d'étanchéité du bloc moteur, se présentant lors du fonctionnement du moteur, **caractérisé en ce qu'un** corps de base (50, 52, 54, 56, 58) au moins dans au moins une deuxième section (II) est déformable en hauteur dans le sens de l'allongement longitudinal d'au moins l'une des faces d'étanchéité du joint de culasse sous la charge maximale générée lors du montage du joint de culasse et/ou lors du fonctionnement du moteur.

2. Joint de culasse avec plusieurs orifices de passage, lesquelles constituent au moins des orifices de combustion (10, 12, 14, 16) et des orifices de vis (18, 20, ... , 36) pour les vis de culasse, pour l'obturation d'un jeu d'étanchéité limité par les faces d'étanchéité du bloc-moteur au moins d'un bloc moteur et d'une culasse, sachant que le joint de culasse comporte des surélévations au moins sur une face, lesquelles constituent au moins un orifice entre des faces d'étanchéité du joint l'enveloppant hermétiquement pour la pression contre au moins une face d'étanchéité du bloc-moteur, dont le profil en hauteur avant le montage du joint de culasse se présente au moins approximativement sous une forme correspondant à la topographie du jeu d'étanchéité à obturer, résultant de la position serrée du joint de culasse entre les faces d'étanchéité du bloc-moteur et par lesquelles les orifices de combustion (10, 12, 14, 16) sont respectivement entourées individuellement, sachant que les surélévations sont constituées par au moins un corps de base (50, 52, 54, 56, 58 ; 160, 160', 200, 202) doté d'un revêtement, corps de base (50, 52, 54, 56, 58 ; 160, 160', 200, 202) dont le matériau est sélectionnée et la section se présente sous une forme telle que le corps de base (50, 52, 54, 56, 58 ; 160, 160', 200, 202) soit résistant au fluage et à la pression sous la charge maximale générée lors du montage du joint de culasse et lors du fonctionnement du moteur, au moins en la première section (I) des faces d'étanchéité du joint de culasse et que, de ce fait, il ne soit pas déformable en hauteur, et sachant que le revêtement est un revêtement (104, 204) résistant à l'usure sous les charges et mouvements relatifs entre le joint de culasse et les faces d'étanchéité du bloc-moteur, se présentant lors du fonctionnement du moteur, **caractérisé en ce qu'**à au moins un orifice de passage sont attribuées deux faces d'étanchéité au moins l'entourant hermétiquement, dont chacune comporte un corps de base (160,·160'; 200, 202) entourant hermétiquement ledit orifice de passage, sachant que
(a) l'un de ces corps de base (160 ; 200) est résistant au fluage et à la pression sous la charge générée tout autour de l'orifice de passage lors du montage du joint de culasse et lors du fonctionnement du moteur, donc indéformable en hauteur, et qu'il est doté d'un revêtement constituant un face d'étanchéité profilée en hauteur selon la topographie du jeu d'étanchéité, et
(b) un autre de ces corps de base (160'; 202) est déformable en hauteur sous la charge générée tout autour de l'orifice de passage lors du montage du joint de culasse ainsi que du fonctionnement du moteur.

3. Joint de culasse selon l'une quelconque des revendications 1 ou 2, **caractérisé en ce que** le revêtement (104, 204) est doté au moins en certaines de ses parties d'une couche de recouvrement (106, 206) déformable dans le domaine micrométrique.

4. Joint de culasse selon l'une quelconque des revendications 1 à 3, **caractérisé en ce que** le matériau du corps de base est un matériau métallique.

5. Joint de culasse selon l'une quelconque des revendications 1 à 4, **caractérisé en ce que** le revêtement (104, 204) est un revêtement synthétique.

6. Joint de culasse selon l'une quelconque ou plusieurs des revendications 3 à 5, **caractérisé en ce que** la couche de recouvrement (106, 206) est une couche de recouvrement synthétique.

7. Joint de culasse selon l'une quelconque des revendications 1 à 6, **caractérisé en ce que** le revêtement (104, 204) se compose d'un matériau tel que le revêtement soit au moins essentiellement résistant à la pression et au fluage sous la charge générée lors du montage du joint de culasse ainsi que du fonctionnement du moteur.

8. Joint de culasse selon l'une quelconque des revendications 1 à 7, **caractérisé en ce que** le revêtement (104, 204) se compose d'un matériau tel que sous les mouvements de glissement entre le joint de culasse et les faces d'étanchéité du bloc-moteur générés lors du fonctionnement du moteur, le frottage de glissement entre les faces d'étanchéité du joint de culasse et les faces d'étanchéité du bloc-moteur soit plus faible que dans le cas d'un contact direct du corps de base avec les faces d'étanchéité du bloc-moteur.

9. Joint de culasse selon l'une quelconque des revendications 1 à 8, **caractérisé en ce que** le joint de culasse, sur la surface des surélévations comportant le revêtement (104, 204), présente une dureté qui est inférieure à la dureté du revêtement (104, 204) sur son côté orienté vers le corps de base.

10. Joint de culasse selon l'une quelconque ou plusieurs des revendications 1 et 3 à 9, **caractérisé en ce que** le corps de base est déformable en hauteur dans le voisinage d'au moins un des orifices de vis (18, ... , 36).

11. Joint de culasse selon l'une quelconque des revendications 1 et 3 à 10, **caractérisé en ce que** l'au moins un corps de base (50) des faces d'étanchéité du joint entourant les orifices de combustion (10, 12, 14, 16) est résistant à la pression et au fluage tout autour des orifices de combustion sous la charge maximale générée lors du montage du joint de culasse ainsi que du fonctionnement du moteur et que, de ce fait, il n'est pas déformable en hauteur.

12. Joint de culasse selon l'une quelconque ou plusieurs des revendications 1 et 3 à 11 avec un évidement attribué à un carter de chaînes du moteur et une face d'étanchéité du joint s'étendant dans le voisinage du bord de l'évidement, **caractérisé en ce que** le corps de base (58) attribué à cette face d'étanchéité du joint est déformable en hauteur au moins en certaines de ses parties.

13. Joint de culasse selon l'une quelconque ou plusieurs des revendications 1 à 12, **caractérisé en ce que** le corps de base comportant le revêtement (104, 204) présente un profil en hauteur correspondant au profil en hauteur de la face d'étanchéité du joint tridimensionnelle qu'il supporte.

14. Joint de culasse selon l'une quelconque ou plusieurs des revendications 1 à 12, **caractérisé en ce que** le revêtement présente une épaisseur de couche variable en fonction du profil en hauteur de la face d'étanchéité du joint tridimensionnelle.

15. Joint de culasse selon l'une quelconque des revendications 1 à 14, **caractérisé en ce que** les faces d'étanchéité se présente sous forme de bandes ou de lignes.

16. Joint de culasse selon l'une quelconque des revendications 1 et 3 à 15, **caractérisé en ce que** l'au moins un corps de base est déformable en hauteur dans les zones où des déformations irréversibles des faces d'étanchéité du bloc-moteur se produisent lors du montage du joint de culasse et/ou du fonctionnement du moteur.
